# EUROPÄISCHE PATENTSCHRIFT

(11) **EP 2 882 886 B1**
(45) Veröffentlichungstag und Bekanntmachung des Hinweises auf die Patenterteilung: **21.03.2018**
(21) Anmeldenummer: 13745381.7
(22) Anmeldetag: 30.07.2013
(51) Int. Cl.: C23C 28/00, C23C 28/04, F16J 9/26

(54) **GLEITELEMENT, INSBESONDERE KOLBENRING, MIT EINER WIDERSTANDSFÄHIGEN BESCHICHTUNG**
SLIDING ELEMENT, IN PARTICULAR PISTON RING, HAVING RESISTANT COATING
ELÉMENT DE GLISSEMENT, EN PARTICULIER SEGMENT DE PISTON, PRÉSENTANT UN REVÊTEMENT RÉSISTANT

(30) Priorität: 10.08.2012 DE 102012214284
(43) Veröffentlichungstag der Anmeldung: 17.06.2015
(73) Patentinhaber: Federal-Mogul Burscheid GmbH, 51399 Burscheid (DE)
(72) Erfinder: IVANOV, Yuriy, 51399 Burscheid (DE); KENNEDY, Marcus, 40479 Düsseldorf (DE)
(74) Vertreter: Hoffmann Eitle
(86) Internationale Anmeldenummer: PCT/EP2013/065993
(87) Internationale Veröffentlichungsnummer: WO 2014/023615

(56) Entgegenhaltungen:
- EP-A2- 2 083 095
- DE-A1-102006 029 415
- DE-A1-102008 042 747
- DE-B3-102009 028 504
- JP-A- 2000 128 516

## Beschreibung

### TECHNISCHES GEBIET

Die Erfindung betrifft ein Gleitelement, insbesondere einen Kolbenring, mit einer Beschichtung auf einem Substrat, die zumindest eine Lauffläche bildet.

Gleitelemente, wie zum Beispiel Kolbenringe, Kolben oder Zylinderlaufbuchsen in Verbrennungsmotoren, müssen über eine möglichst lange Lebensdauer sowohl bei möglichst geringer Reibung als auch mit geringem Verschleiß arbeiten. Um die unmittelbar mit dem Kraftstoffverbrauch des Verbrennungsmotors gekoppelte Reibung zu reduzieren, ist grundsätzlich bekannt, derartige Gleitelemente mit einer reibungsreduzierenden Beschichtung zu versehen. Hierfür wird beispielsweise eine Beschichtung aus DLC (Diamond-Like-Carbon) verwendet, was dem Fachmann grundsätzlich bekannt ist.

Für die Auftragung einer DLC-Schicht stehen verschiedene Verfahren zur Verfügung. Ein zuletzt wegen hoher möglicher Beschichtungsraten und verhältnismäßig geringer Kosten oft verwendbares Verfahren ist das PACVD- (Plasma Assisted Chemical Vapor Deposition) Verfahren, das beispielsweise in der DE 195 13 614 C1 beschrieben wird.

Ein weiteres grundsätzlich eingesetztes Verfahren zur Beschichtung eines Substrats mit einer DLC-Schicht ist das PVD- (Physical Vapor Deposition) Verfahren, welches beispielsweise in der DE 102 03 730 B4 beschrieben wird.

Nachteilig an DLC-Schichtabscheidung insbesondere mittels PACVD-Verfahren ist, dass die hierbei entstehenden hohen mechanischen Eigenspannungen eine relativ schlechte Schichtbeständigkeit nach sich ziehen, sodass derartige Schichten nicht ohne weiteres bei Gleitelementen verwendet werden können.

Aus der DE 10 2009 028 504 B3 geht ein Gleitelement hervor, bei dem eine Beschichtung zwei DLC-Schichten, nämlich eine metallhaltige DLC-Schicht und eine metallfreie DLC-Schicht, umfasst. Die metallhaltige DLC-Schicht wurde dabei durch ein PVD-Verfahren aufgetragen, die metallfreie durch ein PACVD-Verfahren, wodurch unterschiedliche Mikrostrukturen in den Schichten entstehen können. Die PACVD-DLC-Schicht, das heißt die metallfreie DLC-Schicht aus dem Stand der Technik, weist die bereits oben beschriebenen hohen mechanischen Eigenspannungen auf. Es wird im Stand der Technik vermutet, dass diese hohen Eigenspannungen der PACVD-DLC-Schicht durch die metallhaltige PVD-DLC-Zwischenschicht ausgeglichen werden können.

Die Erfinder haben jedoch herausgefunden, dass auch das in der DE 10 2009 028 504 B3 beschriebene Verfahren noch nicht optimal im Hinblick auf die Beständigkeit der Schicht während der gesamten Motorlebensdauer ist. Konkret kann es bei dem im Stand der Technik beschriebenen Gleitelement vereinzelt noch dazu kommen, dass unter schweren Lasten Schichtabplatzungen eintreten und sich die Gleitelemente hinsichtlich ihrer Verschleißeigenschaften und Reibungseigenschaften somit verschlechtern.

Aus der DE 100 18 143 B4 geht ein DLC-Schichtsystem hervor, das auf einem Substrat eine Haftschicht, eine Übergangsschicht und eine Deckschicht aufweist, bei dem die Haftschicht plasmagestützt aufgebracht werden kann, insbesondere durch ein PVD-Verfahren oder ein Plasma-CVD-Verfahren, und die Deckschicht aus diamantähnlichem Kohlenstoff durch Plasma-CVD-Abscheidung aufgebracht werden kann.

Die JP 2004-10923 A betrifft ein Gleitelement mit einer Beschichtung, die von innen nach außen eine Chromschicht, eine Chrom-Kohlenstoff-Schicht, eine DLC-Schicht mit graduierter Härte und eine harte DLC-Schicht aufweist.

Aus der DE 2008 016 864 B3 geht ein Kolbenring hervor, der von innen nach außen eine Haftschicht, eine metallhaltige amorphe Kohlenstoffschicht und eine metallfreie amorphe Kohlenstoffschicht aufweist.

Die DE 10 2009 046 281 B3 betrifft ein Gleitelement, insbesondere einen Kolbenring, bei dem von innen nach außen eine CrN-, eine Me(CₓN_{y}) - und eine DLC-Schicht vorgesehen sind.

EP 2 083 095 A2 offenbart DLC Schichten für Gleitelemente, wobei ein CVD Verfahren zum Aufbringen einer DLC Schicht verwendet wird.

JP 2000 128516 A nennt ein PA-CVD Verfahren zur Bildung einer DLC Schicht.

Schließlich beschreibt die US 2008/0220257 A1 ein Substrat mit einer Beschichtung, die von innen nach außen eine Zwischenschicht aus Kohlenstoff mit einem Young-Modul von mehr als 200 GPa und eine amorphe Kohlenstoffschicht mit einem Young-Modul geringer als 200 GPa aufweist.

### DARSTELLUNG DER ERFINDUNG

Ausgehend vom oben genannten Stand der Technik liegt die Aufgabe der vorliegenden Erfindung darin, ein Gleitelement zur Verfügung zu stellen, das im Hinblick auf die Kombination aus Reibungskoeffizienten und Verschleißeigenschaften weiter verbessert ist. Insbesondere liegt die Aufgabe in einer Verbesserung der Verschleißeigenschaften im Hinblick auf ein mögliches Abplatzen von Teilen der Beschichtung im Motor unter schweren Lasten.

Diese Aufgabe wird durch das Gleitelement gemäß Anspruch 1 gelöst. Weitere vorteilhafte Merkmale der Erfindung ergeben sich aus den Unteransprüchen.

Das erfindungsgemäße Gleitelement, insbesondere der Kolbenring, weist auf einem Substrat eine Beschichtung auf, die zumindest eine Lauffläche bildet. Dabei weist die Beschichtung von innen nach außen eine (bevorzugt PVD-) Karbid- oder Nitridschicht, darauf eine karbidhaltige (bevorzugt PVD-) DLC-Schicht, darauf eine metallfreie PVD DLC-Schicht und darauf eine metallfreie PACVD DLC-Schicht auf.

Durch die Verwendung des erfindungsgemäßen Aufbaus der Beschichtung ist es möglich, Übergänge zwischen den einzelnen PVD-Schichten zu vergleichmäßigen und dadurch eine besonders gute Haftung zwischen den einzelnen Schichten zu erzeugen. Weiter, auf Grund von Affinität von metallfreien PVD DLC- und PACVD DLC-Schichten kann auch die Haftung zwischen beiden metallfreien DLC-Schichten verbessert werden. Durch eine Graduierung von Prozessparametern ist es möglich, auch einen graduierten Übergang zwischen den jeweiligen Schichten der Beschichtung zu erzeugen. Ein so realisierter sanfter Übergang zwischen einzelnen Schichten, und Affinität zwischen der PVD DLC-Schicht und der PACVD DLC-Schicht, unterbindet jegliche Form von Abplatzung, auch unter schweren Lasten im Motor.

Die erfindungsgemäße Beschichtung ist zumindest teilweise zumindest auf einer Lauffläche des Gleitelements aufgebracht. Es ist jedoch auch möglich, dass sich die Beschichtung über die gesamte Lauffläche erstreckt und auch auf Flächen ganz oder teilweise ausgebildet ist, die an die Lauffläche angrenzen. Als Beispiel solcher angrenzender Flächen lassen sich die Flanken eines Kolbenringes nennen.

Die PVD DLC-Schicht kann insbesondere durch Sputtern oder ein Lichtbogenverfahren auf das Substrat oder eine zuvor auf das Substrat aufgebrachte Bindungsschicht aufgetragen werden. Die PACVD DLC-Schicht wird vorzugweise durch den Einsatz eines Plasmas mit einer Plasmageneratorfrequenz von mindestens 1 kHz erzeugt.

In einer bevorzugten Ausführungsform ist zwischen dem Substrat und der Karbid- oder Nitridschicht eine Bindungsschicht aufgebracht, die bevorzugt aus Chrom oder Titan besteht. Diese Bindungsschicht wird gelegentlich auch als Haftschicht bezeichnet und verbessert die Haftung des gesamten Schichtsystems, insbesondere der DLC-Schichten, auf dem Substrat. Als Substrat kann bevorzugt Gusseisen oder Stahl als Grundwerkstoff verwendet werden. Diese Materialien haben sich besonders im Zusammenhang mit Kolbenringen als vorteilhaft erwiesen.

Mit Vorteil weist die Karbid- oder Nitridschicht Wolframkarbid, CrN, Cr2N, TiN oder CrTiN auf.

Unter der karbidhaltigen (bevorzugt PVD-) DLC-Schicht ist eine DLC-Schicht zu verstehen, der ein Karbid beigemengt ist. Der in der DLC-Schicht enthaltene amorphe Kohlenstoff mit signifikantem Anteil von sp3-Bindungen (der signifikante Anteil der ohne langreichweitige Ordnung vernetzten Kohlenstoff sp3-Bindungen beträgt dabei mindestens 20% bevorzugt mindestens 50%) bildet dabei eine Matrix für das hinzugefügte Material. Bevorzugt weist die karbidhaltige DLC-Schicht zusätzlich Wolfram oder Chrom auf. Besonders bevorzugt enthält die karbidhaltige DLC-Schicht dabei Wolframkarbid, insbesondere in Form von nanokristallinen Wolframkarbidausscheidungen. Dieses Merkmal wirkt sich ebenfalls günstig auf die Gleiteigenschaften des Gleitelements aus.

Mit Vorteil ist auf der PACVD DLC-Schicht eine Einlaufschicht ausgebildet, die weicher als die PACVD DLC-Schicht ist. Eine solche weiche Einlaufschicht begünstigt die Eigenschaften des Gleitelements während der Einlaufphase des Gleitelements, beispielsweise in einem neuen Motor oder als Ersatzteil in einem bereits eingelaufenen Motor.

Bevorzugt umfasst die PVD DLC-Schicht mehrere Subschichten. Diese Subschichten können beispielsweise durch graduierte Übergänge miteinander verbunden sein, die sich aus graduiert veränderten Prozessparametern ergeben. Somit ist es möglich, die Haftungseigenschaften zwischen der PVD DLC-Schicht und der karbidhaltigen DLC-Schicht einerseits und der karbidhaltigen DLC-Schicht und der (bevorzugt PVD-) Karbid- oder Nitridschicht andererseits optimal ineinander zu überführen, ohne eine merkliche Diskontinuität innerhalb der Schicht entstehen zu lassen, die üblicherweise mit einer verringerten Haftung der hieran beteiligten Schichten aneinander einhergeht.

In einer bevorzugten Ausführungsform weist die PACVD-DLC-Schicht eine Dicke auf, die zwischen 30% und 70%, bevorzugt zwischen 35% und 65%, einer Gesamtdicke der Beschichtung beträgt. Dieses bevorzugte Schichtdickenverhältnis führt zu guter Beständigkeit der Beschichtung, ohne unnötig viel zusätzliches Material in die Beschichtung aufzunehmen.

Mit Vorteil beträgt eine Gesamtdicke der Beschichtung 2 µm bis 50 µm. Diese Beschichtungsdicke ermöglicht eine besonders gute Balance zwischen Reibungskoeffizient und Verschleißeigenschaften des Gleitelements, vor allem im Fall eines Kolbenrings für einen Verbrennungsmotor.

Weiter wird bevorzugt, dass die PVD-DLC Schicht (22) eine Härte von 700 HV 0,002 bis 2800 HV 0,002 aufweist und, alternativ oder zusätzlich, dass die PACVD DLC-Schicht eine Härte von 1200 HV 0,002 bis 3000 HV 0,002 aufweist. Der beschriebene Härtebereich der PVD-DLC-Schicht und der PACVD-DLC-Schicht hat sich ebenfalls im Hinblick auf die Kombination von Reibungskoeffizient und Verschleißbeständigkeit als besonders vorteilhaft erwiesen.

In einer bevorzugten Ausführungsform weisen die PVD-DLC Schicht einen E-Modul von 150 GPa bis 350 GPa und/oder die PACVD-DLC Schicht einen E-Modul von 160 GPa bis 400 GPa auf. Grundsätzlich wird bevorzugt, dass zumindest die Lauffläche eines Gleitelements zumindest teilweise durch die erfindungsgemäße Beschichtung beschichtet ist. Aus ökonomischen Gründen kann es jedoch auch bevorzugt sein, die Beschichtung auch auf den Laufflanken und auf dem Übergang zwischen Lauffläche und Laufflanke oder auf an die Lauffläche angrenzende Flächen aufzutragen.

Mit Vorteil enthält die karbidhaltige DLC-Schicht und/oder die PVD DLC-Schicht und/oder die PACVD DLC-Schicht Wasserstoff. Dies hat sich im Hinblick auf die Festigkeit der Beschichtung als günstig erwiesen.

Für die bevorzugt vorgesehene Bindungsschicht wird besonders bevorzugt, dass diese eine Schichtdicke von maximal 1 µm aufweist, um ihre Wirkung bei möglichst geringem Auftrag auf das Substrat und damit bei möglichst geringem Materialeinsatz zu entfalten.

### KURZE FIGURENBESCHREIBUNG

Fig. 1 zeigt eine schematische Seitenansicht eines Gleitelements mit einer Beschichtung aus dem Stand der Technik.
Fig. 2 zeigt eine schematische Seitenansicht eines Gleitelements gemäß einer bevorzugten Ausführungsform der vorliegenden Erfindung.

### WEGE ZUR AUSFÜHRUNG DER ERFINDUNG

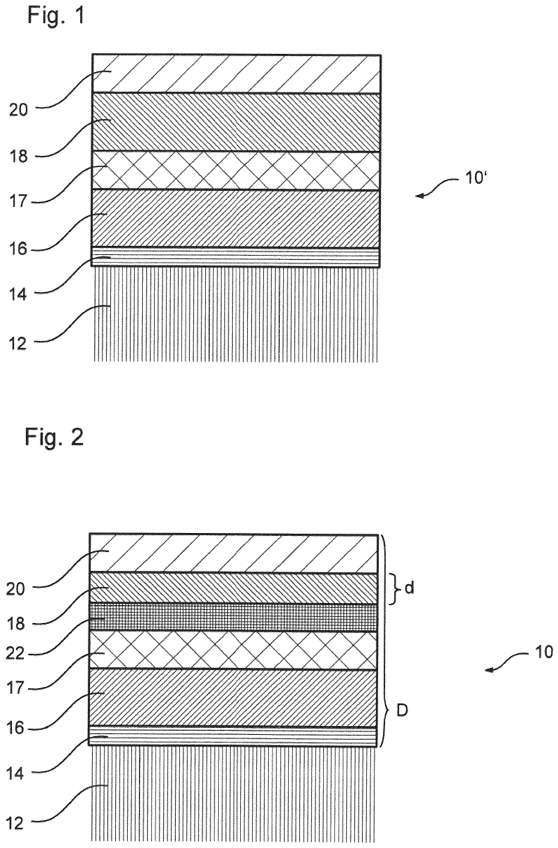

Fig. 1 zeigt einen Schichtaufbau aus dem Stand der Technik. Eine Beschichtung 10' eines Gleitelements auf einem Substrat 12 umfasst eine aus Chrom bestehende auf das Substrat 12 aufgetragene Bindungsschicht 14, die alternativ auch aus Titan bestehen könnte. Auf die Bindungsschicht 14 ist eine Karbidschicht 16 aufgetragen, die alternativ auch als Nitridschicht ausgeführt sein könnte. Auf die Karbidschicht 16 ist eine karbidhaltige DLC-Schicht (17) aufgetragen. Im vorliegenden Beispiel weist die karbidhaltige DLC-Schicht Wolframkarbid, Kohlenstoff und Wasserstoff auf.

Auf die karbidhaltige DLC-Schicht 17 wird gelegentlich eine PACVD-DLC-Schicht 18 aufgetragen, die eine besonders gute Kombination aus Reibungs- und Verschleißeigenschaften aufweist. Auf die PACVD-DLC-Schicht 18 wird gegebenenfalls eine Einlaufschicht 20 aufgetragen, die beispielsweise dann verwendet wird, wenn das Gleitelement während einer Einlaufphase besondere Eigenschaften aufweisen soll, insbesondere eine geringere Oberflächenhärte aufweisen soll.

Fig. 2 zeigt eine bevorzugte Ausführungsform der vorliegenden Erfindung. Gegenüber der zuvor mit Bezug auf Fig. 1 beschriebenen Beschichtung 10' unterscheidet sich die Beschichtung 10 gemäß der in Fig. 2 gezeigten Ausführungsform insbesondere darin, dass zwischen die karbidhaltige DLC-Schicht 17 und die metallfreie PACVD-DLC-Schicht 18 eine metallfreie PVD-DLC-Schicht 22 aufgetragen ist. Diese PVD-DLC-Schicht 22 verbessert die Haftung zwischen der metallfreien PACVD-DLC-Schicht 18 und der karbidhaltigen DLC-Schicht 17 deutlich auf Grund ihrer Affinität. Somit kann die Beständigkeit der Beschichtung 10 auch bei hohen Motorlasten gegenüber dem Stand der Technik wesentlich verbessert werden.

In Fig. 2 ist ferner eine Dicke d der PACVD-DLC Schicht angedeutet, die gegenüber einer Gesamtschichtdicke D der Beschichtung einen Anteil von 40% bis 60%, bevorzugt zwischen 40% und 50% beträgt.

## Patentansprüche

1. Gleitelement, insbesondere Kolbenring, mit einer Beschichtung (10) auf einem Substrat (12), die zumindest eine Lauffläche des Gleitelements bildet,
wobei die Beschichtung (10) von innen nach außen
- eine Karbid- oder Nitridschicht (16),
- darauf eine karbidhaltige DLC-Schicht (17),
- darauf eine metallfreie PVD-DLC Schicht (22) und
- darauf eine metallfreie PACVD-DLC Schicht (18) aufweist.

2. Gleitelement nach Anspruch 1, wobei zwischen dem Substrat (12) und der Karbid- oder Nitridschicht (16) eine Bindungsschicht (14) aufgebracht ist.

3. Gleitelement nach Anspruch 2, wobei die Bindungsschicht (14) aus Chrom oder Titan besteht.

4. Gleitelement nach einem der vorhergehenden Ansprüche, wobei die karbidhaltige DLC-Schicht und/oder die PVD-DLC-Schicht und/oder die PACVD-DLC-Schicht Wasserstoff enthält.

5. Gleitelement nach einem der vorhergehenden Ansprüche, wobei die Karbid- oder Nitridschicht (16) Wolframkarbid oder CrN oder Cr2N oder TiN oder CrTiN aufweist.

6. Gleitelement nach einem der vorhergehenden Ansprüche, wobei die karbidhaltige DLC-Schicht Wolfram oder Chrom aufweist.

7. Gleitelement nach einem der vorhergehenden Ansprüche, wobei auf der PACVD-DLC Schicht (18) eine Einlaufschicht (20) ausgebildet ist, die weicher als die PACVD-DLC Schicht (18) ist.

8. Gleitelement nach einem der vorhergehenden Ansprüche, wobei die PVD-DLC-Schicht (22) mehrere Subschichten umfasst.

9. Gleitelement nach einem der vorhergehenden Ansprüche, wobei die PACVD-DLC Schicht (18) eine Dicke (d) aufweist, die zwischen 30% und 70%, bevorzugt zwischen 35% und 65%, einer Gesamtdicke (D) der Beschichtung (10) beträgt.

10. Gleitelement nach einem der vorhergehenden Ansprüche, wobei eine Gesamtdicke (D) der Beschichtung (10) 2µm bis 50µm beträgt.

11. Gleitelement nach einem der vorhergehenden Ansprüche, wobei die PVD-DLC Schicht (22) eine Härte von 700 HV 0,002 bis 2800 HV 0,002 aufweist.

12. Gleitelement nach einem der vorhergehenden Ansprüche, wobei die PACVD-DLC Schicht (18) eine Härte von 1200 HV 0,002 bis 3000 HV 0,002 aufweist.

13. Gleitelement nach einem der vorhergehenden Ansprüche, wobei die PVD-DLC Schicht (22) einen E-Modul von zwischen 150 GPa und 350 GPa aufweist.

14. Gleitelement nach einem der vorhergehenden Ansprüche, wobei die PACVD-DLC Schicht (18) einen E-Modul von zwischen 160 GPa und 400 GPa aufweist.

15. Gleitelement nach einem der vorhergehenden Ansprüche, wobei die PVD-DLC Schicht (22) durch reaktives Sputtern oder ein Lichtbogenverfahren und die PACVD-DLC Schicht (18) durch ein Plasma mit einer Generatorfrequenz von mindestens 1 kHz aufgebracht ist.

## Claims

1. Sliding element, in particular piston ring, having a coating (10) on a substrate (12) which forms at least a running surface of the sliding element, wherein the coating (10) exhibits, from the inside to the outside,
- a carbide or nitride layer (16),
- thereon a carbide-containing DLC layer (17),
- thereon a metal-free PVD-DLC layer (22) and
- thereon a metal-free PACVD-DLC layer (18).

2. Sliding element according to claim 1, wherein between the substrate (12) and the carbide or nitride layer (16) a bonding layer (14) is applied.

3. Sliding element according to claim 2, wherein the bonding layer (14) is made of chromium or titanium.

4. Sliding element according to any of the preceding claims, wherein the carbide-containing DLC layer and/or the PVD-DLC layer and/or the PACVD-DLC layer contains hydrogen.

5. Sliding element according to any of the preceding claims, wherein the carbide or nitride layer (16) exhibits tungsten carbide or CrN or Cr2N or TiN or CrTiN.

6. Sliding element according to any of the preceding claims, wherein the carbide-containing DLC layer exhibits tungsten or chromium.

7. Sliding element according to any of the preceding claims, wherein on the PACVD-DLC layer (18) is formed a running-in layer (20) which is softer than the PACVD-DLC layer (18).

8. Sliding element according to any of the preceding claims, wherein the PVD-DLC layer (22) comprises several sublayers.

9. Sliding element according to any of the preceding claims, wherein the PACVD-DLC layer (18) has a thickness (d) which is between 30% and 70%, preferably between 35% and 65%, of a total thickness (D) of the coating (10).

10. Sliding element according to any of the preceding claims, wherein a total thickness (D) of the coating (10) is 2 µm to 50 µm.

11. Sliding element according to any of the preceding claims, wherein the PVD-DLC layer (22) has a hardness from 700 HV 0.002 to 2800 HV 0.002.

12. Sliding element according to any of the preceding claims, wherein the PACVD-DLC layer (18) has a hardness from 1200 HV 0.002 to 3000 HV 0.002.

13. Sliding element according to any of the preceding claims, wherein the PVD-DLC layer (22) has a modulus of elasticity of between 150 GPa and 350 GPa.

14. Sliding element according to any of the preceding claims, wherein the PACVD-DLC layer (18) has a modulus of elasticity of between 160 GPa and 400 GPa.

15. Sliding element according to any of the preceding claims, wherein the PVD-DLC layer (22) is applied by reactive sputtering or arc welding and the PACVD-DLC layer (18) is applied by a plasma with a generator frequency of at least 1 kHz.

## Revendications

1. Elément de glissement, en particulier segment de piston, présentant un revêtement (10) sur un substrat (12), qui forme au moins une surface de roulement de l'élément de glissement,
dans lequel le revêtement (10) présente de l'intérieur vers l'extérieur :
- une couche de carbure ou de nitrure (16),
- une couche de DLC à base de carbure (17) par-dessus,
- une couche de PVD-DLC exempte de métal (22) par-dessus et
- une couche de PACVD-DLC exempte de métal (18) par-dessus.

2. Elément de glissement selon la revendication 1, dans lequel une couche de liaison (14) est appliquée entre le substrat (12) et la couche de carbure ou de nitrure (16).

3. Elément de glissement selon la revendication 2, dans lequel la couche de liaison (14) est constituée de chrome ou de titane.

4. Elément de glissement selon l'une quelconque des revendications précédentes, dans lequel la couche de DLC à base de carbure et/ou la couche de PVD-DLC et/ou la couche de PACVD-DLC contient ou contiennent de l'hydrogène.

5. Elément de glissement selon l'une quelconque des revendications précédentes, dans lequel la couche de carbure ou de nitrure (16) présente du carbure de tungstène ou du CrN ou du Cr₂N ou du TiN ou du CrTiN.

6. Elément de glissement selon l'une quelconque des revendications précédentes, dans lequel la couche de DLC à base de carbure présente du tungstène ou du chrome.

7. Elément de glissement selon l'une quelconque des revendications précédentes, dans lequel est formée sur la couche de PACVD-DLC (18) une couche d'entrée (20) qui est plus tendre que la couche de PACVD-DLC (18).

8. Elément de glissement selon l'une quelconque des revendications précédentes, dans lequel la couche de PVD-DLC (22) comprend plusieurs sous-couches.

9. Elément de glissement selon l'une quelconque des revendications précédentes, dans lequel la couche de PACVD-DLC (18) présente une épaisseur (d) qui atteint entre 30% et 70%, de préférence entre 35% et 65% d'une épaisseur totale (D) du revêtement (10).

10. Elément de glissement selon l'une quelconque des revendications précédentes, dans lequel une épaisseur totale (D) du revêtement (10) atteint 2 µm à 50 µm.

11. Elément de glissement selon l'une quelconque des revendications précédentes, dans lequel la couche de PVD-DLC (22) présente une dureté de 700 HV 0,002 à 2800 HV 0,002.

12. Elément de glissement selon l'une quelconque des revendications précédentes, dans lequel la couche de PACVD-DLC (18) présente une dureté de 1200 HV 0,002 à 3000 HV 0,002.

13. Elément de glissement selon l'une quelconque des revendications précédentes, dans lequel la couche de PVD-DLC (22) présente un module E entre 150 GPa et 350 GPa.

14. Elément de glissement selon l'une quelconque des revendications précédentes, dans lequel la couche de PACVD-DLC (18) présente un module E entre 160 GPa et 400 GPa.

15. Elément de glissement selon l'une quelconque des revendications précédentes, dans lequel la couche de PVD-DLC (22) est appliquée par pulvérisation cathodique réactive ou par un procédé à arc électrique et la couche de PACVD-DLC (18) par un plasma avec une fréquence de générateur d'au moins 1 kHz.
